# FASCICULE DE BREVET EUROPEEN

(11) **EP 2 243 674 B1**
(45) Date de publication et mention de la délivrance du brevet: **21.10.2015**
(21) Numéro de dépôt: 10160043.5
(22) Date de dépôt: 15.04.2010
(51) Int. Cl.: B60T 13/567

(54) **Servomoteur et son procédé de montage**
Servomotor und sein Montageverfahren
Servomotor and method for assembling same

(30) Priorité: 22.04.2009 FR 0901958
(43) Date de publication de la demande: 27.10.2010
(73) Titulaire: Robert Bosch GmbH, 70442 Stuttgart (DE)
(72) Inventeur: Richard, Philippe, 77500, CHELLES (FR); Castello, Olivier, 77450 Esbly (FR)

(56) Documents cités:
- GB-A- 2 136 520
- GB-A- 2 156 462
- US-A- 3 442 182
- US-A1- 2002 148 350

## Description

La présente invention a trait à un servomoteur, dispositif d'assistance de freinage, disposé au sein d'un véhicule, notamment un véhicule de type berline ou utilitaire. Elle concerne plus précisément l'assemblage de deux parties distinctes formant le servomoteur.

Un dispositif d'assistance pneumatique tel un servomoteur comporte en pratique un servofrein pneumatique, muni d'une chambre avant à volume variable, séparée d'une chambre arrière, également à volume variable, par une cloison formée par une membrane étanche et souple appelée diaphragme et par une jupe rigide. La jupe rigide entraîne un piston pneumatique prenant appui, par l'intermédiaire d'une tige de poussée, sur un piston primaire du maître cylindre d'un circuit hydraulique de freinage.

La chambre avant, placée du côté du maître cylindre, est reliée pneumatiquement à une source de fluide. La chambre arrière, opposée à la chambre avant, est placée du côté d'une pédale de frein, et est reliée pneumatiquement, de manière contrôlée par une valve, à une source de fluide propulseur comme de l'air à la pression atmosphérique.

Au repos, c'est-à-dire lorsqu'un conducteur n'appuie pas sur la pédale de frein, les chambres avant et arrière sont connectées entre elles alors que la chambre arrière est isolée par rapport à la pression atmosphérique. Lors du freinage, on isole tout d'abord la chambre avant par rapport à la chambre arrière, puis on admet de l'air dans la chambre arrière. Cette admission d'air a pour effet de propulser le diaphragme vers la chambre avant et de mettre en oeuvre l'assistance de freinage pneumatique.

Le servomoteur comporte principalement deux parties. Une première partie est constituée notamment de la chambre arrière, de la cloison mobile munie du diaphragme et du piston pneumatique. Cette première partie est entourée d'une enveloppe cintrée du côté de la tige de frein et évasée de l'autre, au niveau de la jonction avec la seconde partie du servomoteur. Cette enveloppe est appelée couvercle.

La seconde partie est constituée notamment de la chambre avant et d'un maître cylindre et est coiffée d'une enveloppe sensiblement symétrique au couvercle au niveau de l'axe de jonction des deux parties. Cette seconde enveloppe est appelée cylindre.

Le diaphragme est localisé à cheval entre les deux parties et doit notamment assurer une parfaite étanchéité entre le volume de la chambre avant et celui de la chambre arrière, lorsque ces dernières sont isolées l'une de l'autre. Le diaphragme est, à cet effet, monté jointif à la jonction des deux parties couvercle et cylindre.

Dans l'état de la technique, cette opération est assurée par un sertissage entre le bord périphérique de la paroi du couvercle avec celui du cylindre tout en pinçant, entre ces deux bords respectifs, le bord périphérique du diaphragme. Cette opération nécessite un appareillage et une technique spécifique qui la rendent coûteuse.

Le document GB 2 136 520 A montre un servomoteur d'après le préambule de la revendication 1.

L'invention se propose de simplifier cette opération et de réduire son temps et son coût de mise en oeuvre, grâce à un nouveau dispositif de jonction du couvercle et du cylindre, ainsi qu'à un procédé simplifié d'assemblage.

A cet effet, l'invention prévoit la mise en place d'un collier, pièce intermédiaire entre le couvercle et le cylindre. Ce collier est monté par encastrement sur le couvercle, le diaphragme et le cylindre. Après montage du collier, le couvercle, le cylindre et le diaphragme sont solidaires entre eux et parfaitement jointifs. La solidité de l'ensemble permet de résister aux différents efforts subis lors du fonctionnement du servomoteur. Aucune opération de sertissage n'est nécessaire lors de l'assemblage et l'encastrement se réalise simplement.

Avantageusement, le servomoteur selon l'invention comporte au moins un moyen de reprise des efforts transmis entre le couvercle, le cylindre et le maître-cylindre. Par exemple, le servomoteur selon l'invention est de type servomoteur à tirant.

Ainsi, le collier n'a pas pour fonction de subir la totalité des efforts transmis entre le couvercle, le cylindre et le maître cylindre. Ledit collier est donc plus facile et moins coûteux à réaliser.

L'invention a donc pour objet un servomoteur comportant deux parties, une première partie coiffée par un couvercle et comprenant notamment une chambre arrière, une cloison mobile munie d'un diaphragme et actionnant un piston pneumatique, une seconde partie coiffée par un cylindre et comprenant notamment une chambre avant, ledit servomoteur étant **caractérisé en ce que** la jonction du cylindre et du couvercle est réalisée par un collier et en ce que :
- un relief d'une extrémité du couvercle s'encastre fixement le long d'une cale située sur un bord de la face intérieure du collier,
- un relief d'une extrémité du cylindre s'encastre fixement le long d'une cale située sur l'autre bord de la face intérieure du collier,
- un relief femelle de la périphérie du diaphragme s'imbrique le long d'un relief mâle se présentant sous la forme d'un rail courant le long de toute ou partie de la circonférence de la face intérieure du collier et ce, parallèlement à ses deux bords,
- une partie de la paroi du diaphragme est prise en sandwich entre les parois du cylindre et du couvercle.

Selon une forme préférentielle de l'invention, le collier est divisé en segments de longueur égale tels que, sur un même bord de la face intérieure du collier, un segment avec cale alterne avec un segment sans cale, ces segments étant au même nombre sur chaque bord de la face intérieure du collier.

Selon une forme préférentielle de l'invention, chacun des segments du collier comporte une cale, de telle sorte que les cales de deux segments consécutifs sont situées chacune sur un bord de la bague.

Selon une forme préférentielle de l'invention, le collier comporte, entre deux segments portant ou non une cale, des encoches.

Selon une forme préférentielle de l'invention, une cale se présente sous la forme d'un prisme droit de base triangulaire, lié à la face intérieure de la bague par une de ses faces latérales, une arête de cette face étant tangente à un bord de la face intérieure de la bague.

Selon une forme préférentielle de l'invention, le rail comporte des jours situés en vis-à-vis des cales et de longueur sensiblement égale à ces dernières.

Selon une forme préférentielle de l'invention, le collier est réalisé en un matériau de type plastique ou thermoplastique.

Selon une forme préférentielle de l'invention, le nombre de segments est compris entre quatorze et vingt-deux.

Selon une forme préférentielle de l'invention, le servomoteur comporte au moins un moyen de reprise des efforts transmis entre le couvercle, le cylindre et le maître-cylindre.

L'invention a également pour objet un procédé de montage d'un servomoteur selon l'une des revendications précédentes, **caractérisé en ce qu'**il comporte les étapes suivantes :
- on encastre le relief mâle situé le long de la face intérieure du collier dans une gorge située à la périphérie du diaphragme,
- puis on encastre l'extrémité du couvercle dans le collier en faisant glisser la partie courbée du profil de canne le long du biseau des reliefs, l'encastrement étant réalisé lorsque la partie plane du profil de canne a pris appui contre la face interne des reliefs,
- puis on encastre l'extrémité du cylindre dans le collier en faisant glisser la partie courbée du profil de canne le long du biseau des reliefs, l'encastrement étant réalisé lorsque le chant a pris appui contre la face interne des reliefs,
les deux dernières étapes pouvant être interverties ou réalisées simultanément.

L'invention sera mieux comprise à la lecture de la description qui suit et à l'examen des figures qui l'accompagnent. Celles-ci sont présentées à titre indicatif et nullement limitatif de l'invention.

Les figures montrent :
- Figure 1 : une vue en coupe de la jonction cylindre-couvercle selon l'état de la technique,
- Figure 2 : une vue en coupe de la jonction cylindre-couvercle selon l'invention,
- Figure 3 : une vue d'un fragment de la face extérieure du collier selon l'invention,
- Figure 4 : une perspective d'un fragment du collier selon l'invention.

Les références ci-dessous sont utilisées dans les figures suivantes :
- 1 : servomoteur
- 2 : couvercle
- 3 : cylindre
- 4 : diaphragme
- 5 : chambre arrière
- 6 : jupe rigide
- 7 : chambre avant
- 8 : collier
- 9 : relief du cylindre 3
- 10 : chant du relief 9
- 11 : reliefs du diaphragme 4
- 12 : repliement du couvercle 2
- 13 : retroussement du couvercle 2
- 14 : relief du couvercle 2
- 15 : partie plane du relief 14
- 16 et 17 : cales du collier 8
- 18 : rail du collier 8
- 19 et 20 : lèvres du bord du diaphragme 4.

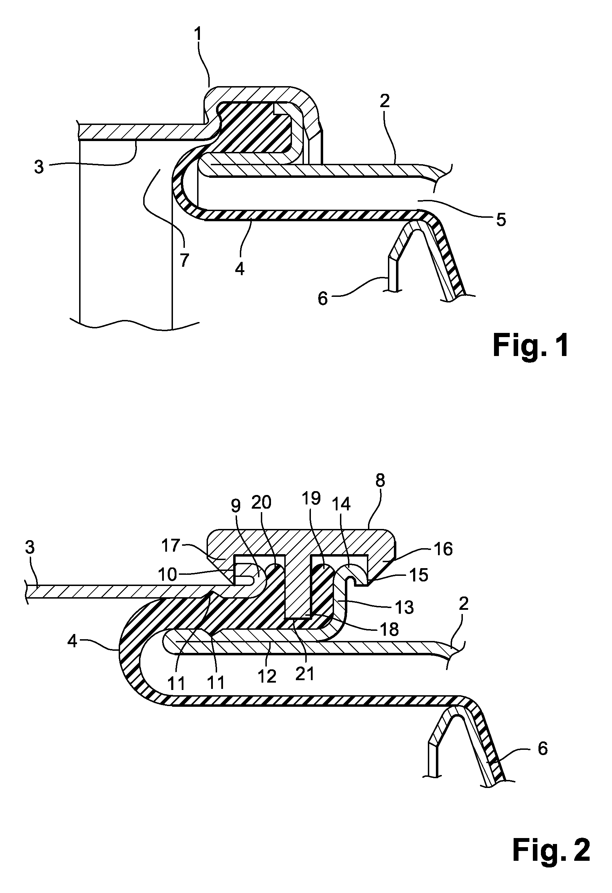

Sur la figure 1 on distingue, sur une partie du servomoteur 1, la jonction entre le couvercle 2 et le cylindre 3. Les extrémités du couvercle 2 et du cylindre 3 comportent chacun un relief en profil de canne permettant leur emboitement puis leur sertissage, tout en réservant entre ces deux extrémités un espace permettant au pourtour du diaphragme 4 de s'y insérer puis d'être pincé au moment du sertissage. Entre le diaphragme 4 et le couvercle 2 est située la chambre arrière 5, laquelle reçoit l'air à la pression atmosphérique, ce qui nécessite une excellente étanchéité de la jonction entre les trois périphéries respectivement du couvercle, du diaphragme et du cylindre. Le diaphragme 4 est relié à une jupe 6 rigide, elle-même reliée à un piston pneumatique (non représenté). Entre le diaphragme 4 et le cylindre 3 est située une chambre avant 7. Cette chambre avant 7 est reliée à une pompe à vide (non représentée), qui actionne par dépression la cloison mobile formée par le diaphragme 4.

La figure 2 représente une vue en coupe d'une partie d'un servomoteur selon l'invention. Dans l'exemple représenté, il s'agit d'un servomoteur à tirant. Le ou les tirants transmettent la plus grande partie des efforts entre le cylindre 3 et le couvercle 2. Les tirants ne sont pas représentés sur la figure 2.

Le servomoteur 1 comporte un collier 8, assurant la jonction des trois extrémités périphériques respectivement du couvercle 2, du cylindre 3 et du diaphragme 4. Sur la figure 2 est reprise la numérotation des pièces communes à la figure 1. Le cylindre 3 comporte à son extrémité un relief 9 en profil de canne. Le relief 9 se décompose en une partie bombée et une partie plane dont l'extrémité possède un chant plat 10. Le relief 9 se positionne sur la surface extérieure du cylindre et donc du servomoteur.

Le relief de l'extrémité du couvercle 2 est constitué également par un repliement 12 bord à bord de la paroi, se poursuivant par un retroussement 13 perpendiculaire au plan de repliement et se terminant également par une partie 14 en profil de canne. L'extrémité du profil de canne forme une partie plane 15.

Le diaphragme 4 comporte des reliefs circulaires 11, situés proches de sa périphérie. Lors du montage du servomoteur, une zone du diaphragme qui comporte les reliefs 11 se retrouve prise en sandwich entre le couvercle 2 et le cylindre 3. Les reliefs 11 sont écrasés au contact du couvercle 2 et du cylindre 3, ce qui facilite le maintien du diaphragme 4 après l'assemblage du servomoteur.

La structure du collier est une bande refermée sur elle-même, formant une bague. A chaque bord de la face intérieure de la bague, des reliefs 16 et 17 permettent respectivement aux reliefs 9 et 14 du cylindre et du couvercle de prendre appui et de se maintenir en place à l'intérieur du collier 8. Ces reliefs (16, 17) permettent, le long de la circonférence intérieure de la bague, un maintien ferme du cylindre 3, du diaphragme 4 et du couvercle 2. Les reliefs (16, 17) se présentent comme des cales orientées le long de la circonférence de la bague.

Les dimensions des cales (16, 17) permettent de disposer deux cales de part et d'autre de la bague tout en conservant un espace libre au milieu.

Dans ledit espace libre, la face intérieure de la bague comporte aussi un relief mâle 18, sous la forme d'un rail perpendiculaire à cette face. Le rail 18 court le long de la circonférence intérieure du collier, d'un seul tenant ou sous la forme de sections uniformément réparties.

Selon une variante de l'invention, l'un et/ou l'autre des reliefs 16 et 17 parcourent la totalité de la circonférence intérieure de la bague.

Selon une variante préférée de l'invention, le collier 8 est divisé en segments tels que, sur un même bord de la face intérieure, un segment comportant une cale 16 ou 17 alterne avec un segment sans cale. De manière préférentielle, ces segments sont de longueur égale et au même nombre sur chaque bord de la face intérieure du collier.

Une première possibilité consiste à alterner un segment comprenant une cale 16 et une cale 17, situées chacune sur un bord, avec un segment sans cale. Une seconde possibilité consiste en ce que tous les segments sont munis d'une seule cale, celle-ci se situant alternativement sur l'un et l'autre bord de la face intérieure du collier.

La seconde possibilité constitue une forme préférée de l'invention car elle offre d'une part, grâce aux alternances des reliefs, une prise souple et bien répartie le long d'un bord du collier et d'autre part, un bon équilibre des forces de tractions de part et d'autre du couvercle 2 et du cylindre 3. Le décalage entre une force de traction présent sur un relief et correspondant au couvercle et une force de traction présente sur un relief opposé et correspondant au cylindre équivaut alors à la longueur d'un segment.

La bonne répartition des forces de traction dépend également du nombre de segments. Dans le cadre de la présente invention, le nombre de segments divisant le collier est préférentiellement compris entre quatorze et vingt-deux, selon le matériau utilisé pour la fabrication du collier.

Etant données les propriétés à la fois de souplesse et de solidité nécessaires lors de l'emboîtement et de l'utilisation ultérieure, le collier est réalisé préférentiellement dans un matériau de type plastique ou thermoplastique. De manière préférée, on utilise un élastomère thermoplastique (TPE).

Une cale (16, 17) se présente sous la forme d'un prisme droit de base triangulaire, lié à la face intérieure de la bague par une de ses faces latérales, une arête de cette face étant tangente à un bord de la face intérieure de la bague.

L'angle du prisme formé par la face latérale liée à la bague et la face orientée vers l'intérieur de la bague est supérieur ou égal à 90°. De manière préférentielle, comme représenté sue la figure 2, il est égal à 90°. Ainsi, la face de la cale orientée vers l'intérieur de la bague, ou face interne de la cale, est perpendiculaire à la face intérieure de la bague. C'est sur cette face interne que s'effectue le contact avec le couvercle 2 et le cylindre 3 lorsque le servomoteur est assemblé.

La face de la cale orientée vers l'extérieur de la bague offre donc un profil biseauté qui permet un glissement facilité des pièces lors de l'assemblage.

Au moment de l'encastrement dans le collier 8, les parties courbées (9, 14) du couvercle 2 et du cylindre 3 viennent glisser le long de la face biseautée des cales (16, 17). Lorsque l'équivalent de la longueur du retour des cannes (9, 14) a glissé le long du biseau, le chant 10 et la partie plane 15 prennent appui contre les faces internes des cales (16, 17) : le couvercle 2 et le cylindre 3 sont alors maintenus par le collier 8. Durant cette phase d'encastrement, le passage des reliefs du cylindre 3 et du couvercle 2 derrière les reliefs du collier est permis grâce à la flexibilité de ces reliefs (16, 17), mais aussi grâce à l'élasticité de la paroi du diaphragme 4 au-dessus de laquelle les extrémités du couvercle 2 et du cylindre 3 viennent s'encastrer tout en prenant appui.

Après l'assemblage, le contact entre le collier 8 et le couvercle 2 se fait entre les deux surfaces planes formées par la face interne de la cale 16 et l'extrémité 15 du profil de canne 14.

Le contact entre le collier 8 et le cylindre 3 se fait entre les deux surfaces planes formées par la face interne de la cale 17 et le chant 10 du relief 9.

Le diamètre intérieur du collier 8 est calculé de sorte à correspondre aux diamètres extérieurs du couvercle 2 et du cylindre 3 et à néanmoins permettre l'encastrement des profils de canne 9 et 14 derrière les cales 17 et 16.

La périphérie du diaphragme 4 présente un relief femelle, sous la forme d'une gorge munie de deux lèvres 19 et 20, chacune des lèvres (19,20) prenant place de part et d'autre du rail 18. La surface plane 21 du sommet du rail 18 vient en appui au fond de la gorge comprise entre les deux lèvres (19,20).

La surface du diaphragme 4 opposée à la gorge repose sur une face du repliement 12 du couvercle 2. Cette surface du diaphragme est munie de reliefs circulaires 11, facilitant le maintien du diaphragme.

L'autre surface du diaphragme, également munie de reliefs 11, est au contact de la paroi du cylindre 3. Au niveau du repliement 12, le diaphragme 4 est donc pris en sandwich entre le couvercle 2 et le cylindre 3.

Les lèvres 19 et 20 sont emprisonnées entre le rail 18 et respectivement le redressement 13 du bord du couvercle 2 et le relief 9 du cylindre 3. De la sorte, le diaphragme 4 est fixé solidairement à l'ensemble cylindre 3, couvercle 2 et collier 8.

La distance entre la face intérieure d'une cale 16 ou 17 et le rail 18 doit correspondre, à la souplesse près du matériau du diaphragme, aux épaisseurs cumulées respectivement du relief 9 et de la lèvre 20, et du relief 14 et de la lèvre 19. La position du rail 18 dans l'espace compris entre les cales 16 et 17 dépend donc des épaisseurs relatives des éléments 9, 14, 19 et 20.

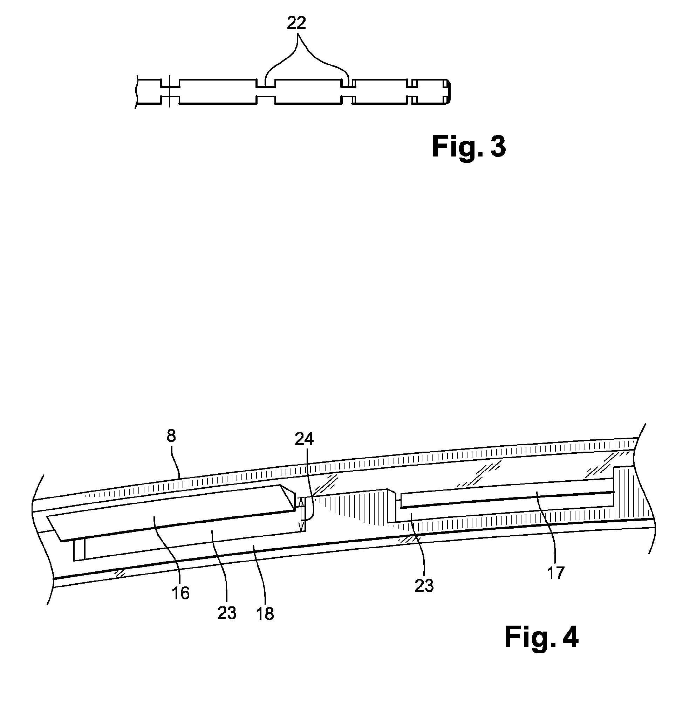

Selon une forme particulière de l'invention, les différents segments de la bague comportant ou non une cale peuvent être séparés par des encoches 22, situées de part et d'autre du rail 18. Ces encoches améliorent la flexibilité du collier lors de l'assemblage. Cette forme de l'invention est représentée à la figure 3.

Les encoches sont toutes de même longueur, celle-ci étant préférentiellement comprise entre 20 et 50% de la longueur d'un segment comportant ou non une cale. La profondeur maximale d'une encoche correspond à la distance entre le bord de la bague et le bord du rail 18.

Préférentiellement, le nombre de segments est égal au nombre d'encoches, c'est-à-dire que deux segments consécutifs sont séparés par une encoche. Le nombre préférentiel d'encoches est donc également compris entre quatorze et vingt-deux.

Selon une autre forme particulière de l'invention, le rail 18 comporte des jours 23 situés en vis-à-vis des cales 16 et 17 et de longueur sensiblement égale à ces dernières. Ces jours ont également pour but d'améliorer la flexibilité du collier lors de l'assemblage. Cette forme de l'invention est représentée à la figure 4.

La hauteur 24 des jours ne doit pas dépasser une certaine valeur, afin de ne pas fragiliser exagérément le rail 18. De manière préférentielle, la hauteur maximale 24 est approximativement égale aux deux tiers de la hauteur du rail 18.

Les deux formes précédentes de l'invention peuvent être regroupées, le collier résultant comportant à la fois des encoches 22 et des jours 23.

L'invention a également pour objet un procédé de montage d'un servomoteur comportant deux parties, une première partie coiffée par un couvercle 2 et comprenant notamment une chambre arrière 5, une cloison mobile munie d'un diaphragme 4 et actionnant un piston pneumatique 6, une seconde partie coiffée par un cylindre 3 et comprenant notamment une chambre avant 7, **caractérisé en ce qu'**il comprend les étapes suivantes :
- on encastre le relief mâle 18 situé le long de la face intérieure du collier 8 dans une gorge (19,20) située à la périphérie du diaphragme,
- puis on encastre l'extrémité du couvercle 2 dans le collier 8 en faisant glisser la partie courbée du profil de canne 14 le long du biseau des reliefs 16, l'encastrement étant réalisé lorsque la partie plane 15 du profil de canne a pris appui contre la face interne des reliefs 16,
- puis on encastre l'extrémité du cylindre 3 dans le collier 8 en faisant glisser la partie courbée du profil de canne 9 le long du biseau des reliefs 17, l'encastrement étant réalisé lorsque le chant 10 a pris appui contre la face interne des reliefs 17,
les deux dernières étapes pouvant être interverties ou réalisées simultanément.

## Revendications

1. Servomoteur (1) comportant deux parties, une première partie coiffée par un couvercle (2), et comprenant notamment une chambre arrière (5), une cloison mobile munie d'un diaphragme (4) et actionnant un piston pneumatique (6), une seconde partie coiffée par un cylindre (3) et comprenant notamment une chambre avant (7), **caractérisé en ce que** la jonction du cylindre (3) et du couvercle (2) est réalisée par un collier (8) et **en ce que** :
- un relief (14) d'une extrémité du couvercle (2) s'encastre fixement le long d'un relief ou cale (16) situé sur un bord de la face intérieure du collier (8),
- un relief (9) d'une extrémité du cylindre (3) s'encastre fixement le long d'un relief ou cale (17) situé sur l'autre bord de la face intérieure du collier (8), **caractérisé en ce que**:
- un relief femelle (19,20) de la périphérie du diaphragme (4) s'imbrique le long d'un relief mâle (18) se présentant sous la forme d'un rail courant le long de toute ou partie de la circonférence de la face intérieure du collier (8) et ce, parallèlement à ses deux bords,
- une partie de la paroi du diaphragme (4) est prise en sandwich entre les parois du cylindre (3) et du couvercle (2).

2. Servomoteur selon la revendication 1, **caractérisé en ce que** le collier (8) est divisé en segments de longueur égale tels que, sur un même bord de la face intérieure du collier (8), un segment avec cale alterne avec un segment sans cale, ces segments étant au même nombre sur chaque bord de la face intérieure du collier.

3. Servomoteur selon la revendication 2, **caractérisé en ce que** chacun des segments du collier (8) comporte une cale, de telle sorte que les cales de deux segments consécutifs sont situées chacune sur un bord de la bague.

4. Servomoteur selon l'une des revendications 2 à 3, **caractérisé en ce que** le collier (8) comporte, entre deux segments portant ou non une cale, des encoches (22).

5. Servomoteur selon l'une des revendications 1 à 4, **caractérisé en ce qu**'une cale se présente sous la forme d'un prisme droit de base triangulaire, lié à la face intérieure de la bague par une de ses faces latérales, une arête de cette face étant tangente à un bord de la face intérieure de la bague.

6. Servomoteur selon l'une des revendications précédentes, **caractérisé en ce que** le rail (18) comporte des jours (23) situés en vis-à-vis des cales (16,17) et de longueur sensiblement égale à ces dernières.

7. Servomoteur selon l'une des revendications précédentes, **caractérisé en ce que** le collier (8) est réalisé en un matériau de type plastique ou thermoplastique.

8. Servomoteur selon l'une des revendications 2 à 4, **caractérisé en ce que** le nombre de segments est compris entre quatorze et vingt-deux.

9. Servomoteur selon l'une des revendications précédentes, **caractérisé en ce qu'**il comporte au moins un moyen de reprise des efforts transmis entre le couvercle, le cylindre et le maître-cylindre.

10. Procédé de montage d'un servomoteur selon l'une des revendications précédentes, **caractérisé en ce qu'**il comporte les étapes suivantes :
- on encastre le relief mâle (18) situé le long de la face intérieure du collier (8) dans une gorge (19, 20) située à la périphérie du diaphragme (4),
- puis on encastre l'extrémité du couvercle (2) dans le collier (8) en faisant glisser la partie courbée du profil de canne (14) le long du biseau des reliefs (16), l'encastrement étant réalisé lorsque la partie plane (15) du profil de canne a pris appui contre la face interne des reliefs (16),
- puis on encastre l'extrémité du cylindre (3) dans le collier (8) en faisant glisser la partie courbée du profil de canne (9) le long du biseau des reliefs (17), l'encastrement étant réalisé lorsque le chant (10) a pris appui contre la face interne des reliefs (17),
les deux dernières étapes pouvant être interverties ou réalisées simultanément.

## Patentansprüche

1. Servomotor (1), der zwei Teile aufweist, ein erstes Teil, das durch einen Deckel (2) abgedeckt ist und insbesondere eine hintere Kammer (5), eine bewegliche Trennwand aufweist, die mit einer Membran (4) versehen ist, und einen pneumatischen Kolben (6) betätigt, ein zweites Teil, das durch einen Zylinder (3) abgedeckt ist und insbesondere eine vordere Kammer (7) aufweist, **dadurch gekennzeichnet, dass** die Verbindung des Zylinders (3) und des Deckels (2) durch eine Schelle (8) erstellt ist und dass:
- ein Relief (14) eines Endes des Deckels (2) fest entlang eines Reliefs oder Keils (16) eingreift, das sich an einem Rand der Innenfläche der Schelle (8) befindet,
- ein Relief (9) eines Endes des Zylinders (3) fest entlang eines Reliefs oder Keils (17) eingreift, das sich an dem anderen Rand der Innenfläche der Schelle (8) befindet, **dadurch gekennzeichnet, dass**
- sich ein Einschub-Relief (19, 20) des Umfangs der Membran (4) entlang eines Steck-Reliefs (18) einschiebt, das die Form einer Schiene aufweist, die entlang des gesamten oder eines Teils des Umfangs der Innenfläche der Schelle (8) verläuft, und dies parallel zu ihren zwei Rändern,
- ein Teil der Wand der Membran (4) sandwichartig zwischen den Wänden des Zylinders (3) und dem Deckel (2) angeordnet ist.

2. Servomotor nach Anspruch 1, **dadurch gekennzeichnet, dass** die Schelle (8) in Segmente mit gleicher Länge derart unterteilt ist, dass sich auf einem gleichen Rand der Innenfläche der Schelle (8) ein Segment mit Keil mit einem Segment ohne Keil abwechselt, wobei diese Segmente in der gleichen Anzahl auf jedem Rand der Innenfläche der Schelle sind.

3. Servomotor nach Anspruch 2, **dadurch gekennzeichnet, dass** jedes der Segmente der Schelle (8) einen Keil aufweist, so dass die Keile von zwei aufeinanderfolgenden Segmenten jeweils an einem Rand des Rings angeordnet sind.

4. Servomotor nach einem der Ansprüche 2 bis 3, **dadurch gekennzeichnet, dass** die Schelle (8) zwischen zwei Segmenten, die einen Keil tragen oder nicht, Kerben (22) aufweist.

5. Servomotor nach einem der Ansprüche 1 bis 4, **dadurch gekennzeichnet, dass** ein Keil die Form eines geraden Prismas mit dreieckiger Grundfläche aufweist, das mit der Innenfläche des Ringes durch eine seiner Seitenflächen verbunden ist, wobei eine Kante dieser Fläche mit einem Rand der Innenfläche des Ringes tangiert.

6. Servomotor nach einem der vorhergehenden Ansprüche, **dadurch gekennzeichnet, dass** die Schiene (18) Öffnungen (23) aufweist, die den Keilen (16, 17) gegenüberliegen und von einer Länge sind, die diesen Letzteren im Wesentlichen gleich ist.

7. Servomotor nach einem der vorhergehenden Ansprüche, **dadurch gekennzeichnet, dass** die Schelle (8) aus einem Material vom Typ des Kunststoffs oder des thermoplastischen Materials hergestellt ist.

8. Servomotor nach einem der Ansprüche 2 bis 4, **dadurch gekennzeichnet, dass** die Anzahl der Segmente zwischen vierzehn und zweiundzwanzig beträgt.

9. Servomotor nach einem der vorangehenden Ansprüche, **dadurch gekennzeichnet, dass** er mindestens ein Mittel zur Aufnahme der Kräfte aufweist, die zwischen dem Deckel, dem Zylinder und dem Hauptzylinder übertragen werden.

10. Verfahren zum Montieren eines Servomotors nach einem der vorhergehenden Ansprüche, **dadurch gekennzeichnet, dass** es die folgenden Schritte aufweist:
- Stecken des Steck-Reliefs (18), das entlang der Innenfläche der Schelle (8) angeordnet ist, in eine Kehle (19, 20), die an dem Umfang der Membran (4) angeordnet ist,
- dann Stecken des Endes des Deckels (2) in die Schelle (8), indem der gekrümmte Teil des Stabprofils (14) entlang der Kante der Reliefs (16) geschoben wird, wobei das Stecken ausgeführt ist, wenn der flache Teil (15) des Stabprofils gegen die Innenfläche der Reliefs (16) in Anlage gekommen ist,
- dann Stecken des Endes des Zylinders (3) in die Schelle (8), indem der gekrümmte Teil des Stabprofils (9) entlang der Kante der Reliefs (17) geschoben wird, wobei das Stecken ausgeführt ist, wenn die Kante (10) gegen die Innenfläche der Reliefs (17) in Anlage gekommen ist,
wobei die letzten zwei Schritte vertauscht oder gleichzeitig durchgeführt werden können.

## Claims

1. Brake booster (1) comprising two parts, namely a first part capped by a cover (2) and comprising in particular a rear chamber (5) and a moveable partition provided with a diaphragm (4) and actuating a pneumatic piston (6), and a second part capped by a cylinder (3) and comprising in particular a front chamber (7), **characterized in that** the junction between the cylinder (3) and the cover (2) is formed by a collar (8), and **in that**:
- a relief (14) of one end of the cover (2) engages fixedly along a relief or shim (16) situated on one edge of the inner face of the collar (8),
- a relief (9) of one end of the cylinder (3) engages fixedly along a relief or shim (17) situated on the other edge of the inner face of the collar (8), **characterized in that**:
- a female relief (19, 20) of the periphery of the diaphragm (4) is fitted along a male relief (18) taking the form of a rail running along the whole or part of the circumference of the inner face of the collar (8), parallel to its two edges,
- a part of the wall of the diaphragm (4) is sandwiched between the walls of the cylinder (3) and of the cover (2).

2. Brake booster according to Claim 1, **characterized in that** the collar (8) is divided into segments of equal length such that, on one and the same edge of the inner face of the collar (8), a segment with a shim alternates with a segment without a shim, these segments being of the same number on each edge of the inner face of the collar.

3. Brake booster according to Claim 2, **characterized in that** each of the segments of the collar (8) comprises a shim such that the shims of two consecutive segments are each situated on an edge of the ring.

4. Brake booster according to either of Claims 2 and 3, **characterized in that** the collar (8) comprises slots (22) between two segments which bear or do not bear shim.

5. Brake booster according to one of Claims 1 to 4, **characterized in that** a shim takes the form of a right prism with a triangular base, which prism is connected to the inner face of the ring by one of its lateral faces, a salient edge of this face being tangent to an edge of the inner face of the ring.

6. Brake booster according to one of the .preceding claims, **characterized in that** the rail (18) comprises apertures (23) situated opposite the shims (16, 17) and being of substantially equal length to the latter.

7. Brake booster according to one of the preceding claims, **characterized in that** the collar (8) is made of a material of the plastic or thermoplastic type.

8. Brake booster according to one of Claims 2 to 4, **characterized in that** the number of segments is between fourteen and twenty-two.

9. Brake booster according to one of the preceding claims, **characterized in that** it comprises at least one means for taking up forces transmitted between the cover, the cylinder and the master cylinder.

10. Method for assembling a brake booster according to one of the preceding claims, **characterized in that** it comprises the following steps:
- the male relief (18) situated along the inner face of the collar (8) is engaged in a groove (19, 20) situated at the periphery of the diaphragm (4),
- then the end of the cover (2) is engaged in the collar (8) by sliding the curved part of the walking stick profile (14) along the bevel of the reliefs (16), engagement being achieved when the planar part (15) of the walking stick profile has borne against the internal face of the reliefs (16),
- then the end of the cylinder (3) is engaged in the collar (8) by sliding the curved part of the walking stick profile (9) along the bevel of the reliefs (17), engagement being achieved when the edge (10) has borne against the internal face of the reliefs (17),
it being possible for the last two steps to be inverted or carried out simultaneously.
